(19) Europäisches Patentamt
European Patent Office
Office européen des brevets

(11) **EP 4 623 699 A1**

(12) **EUROPEAN PATENT APPLICATION**

(43) Date of publication:
01.10.2025 Bulletin 2025/40

(21) Application number: 24382336.6

(22) Date of filing: 27.03.2024

(51) International Patent Classification (IPC):
*A23G 9/32* (2006.01)    *A23G 9/34* (2006.01)
*A23G 9/42* (2006.01)    *A23G 9/46* (2006.01)
*A23G 9/50* (2006.01)

(52) Cooperative Patent Classification (CPC):
**A23G 9/32; A23G 9/34; A23G 9/42; A23G 9/46;
A23G 9/503;** A23G 2200/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Naturpolo SL
20160 Lasarte-Oria (ES)**

(72) Inventors:
• **GALDONA SANZ, Iñigo
20160 LASARTE-ORIA (ES)**
• **ALMANDOZ LAGUARDIA, Oier
20160 LASARTE-ORIA (ES)**

(74) Representative: **Galbaian S.Coop.
Garaia Parke Teknologikoa
Goiru kalea 1
20500 Arrasate-Mondragón (ES)**

(54) **FROZEN CONFECTIONERY PRODUCT**

(57) Frozen confectionery product (10) comprising a mixture (11) comprising a common composition in combination with a dairy composition or an aqueous composition, the common composition comprising: between 5 and 25% by weight of at least one sugar compound, between 0.5 and 2.5% by weight of at least one gelling agent, between 0.05 and 2% by weight of a thickener, and between 20 and 60% by weight of water. The dairy composition comprises between 5 and 40% by weight of dairy products and the aqueous composition comprises between 25 and 60% by weight of cremogenate, the percentages by weight referring to the total weight of the mixture (11). Method of manufacturing of the confectionery product (10).

**Fig. 2**

EP 4 623 699 A1

**Description**

TECHNICAL FIELD

The present invention relates to frozen confectionery compositions and products.

PRIOR ART

Ice cream and other confectionery products which are usually stored below freezing point and intended for immediate consumption must meet special requirements. For example, thermal stability is desirable, i.e. that the ice cream does not melt immediately at room temperature, as well as maintaining most organoleptic properties, such as creaminess in the mouth. These products must also be of the best possible quality when refrozen and must often remain stable over long storage periods.

WO2013/147847A1 describes a composition and a method of manufacturing an aerated frozen confectionery product with high stability.

DISCLOSURE OF THE INVENTION

The object of the invention is to provide a frozen confectionery product and a method of manufacturing such product, as defined in the claims.

A first aspect of the invention relates to a frozen confectionery product that comprises a mixture that comprises a common composition in combination with a dairy composition or an aqueous composition, the common composition comprising:

- between 5 and 25% by weight of at least one sugar compound,
- between 0.5 and 2.5% by weight of at least one gelling agent,
- between 0,05 and 2 % by weight of a thickener, and
- between 20 and 60% by weight of water.

In case the common composition is combined with a dairy composition, the dairy composition comprises between 5 and 40% by weight of dairy products. In case the common composition is combined with an aqueous composition, the aqueous composition comprises between 25 and 60 % by weight of cremogenate.

The percentages by weight indicated refer to the total weight of the mixture.

A second aspect of the invention relates to a method of manufacturing the product of the invention.

The confectionery product developed by the inventors is similar to an ice cream, but once thawed it does not melt, is dimensionally stable and maintains optimal organoleptic characteristics of creaminess and smoothness for at least 24 hours. These characteristics of the product may allow e.g. catering companies to include it in their catalogue, as it can be available at room temperature for a long time.

These and other advantages and features of the invention will become apparent in view of the figures and the detailed description of the invention.

DESCRIPTION OF THE DRAWINGS

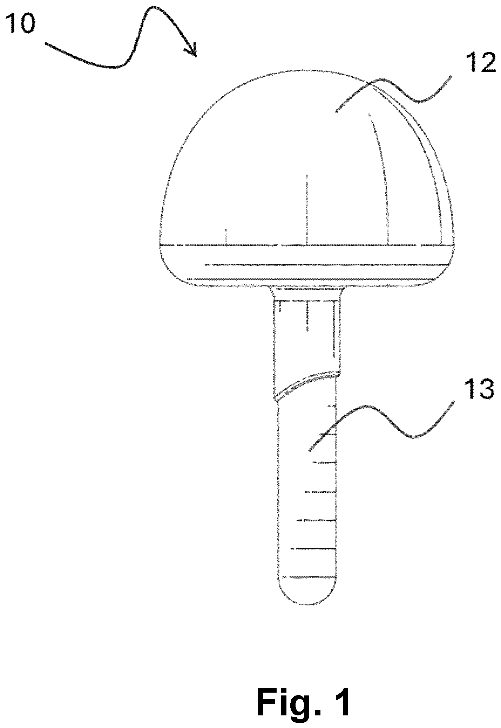

Figure 1 shows a front view of a frozen confectionery product according to one embodiment of the invention.

Figure 2 shows a sectioned front view of the frozen confectionery product of Figure 1.

DETAILED DISCLOSURE OF THE INVENTION

The inventors have developed a frozen confectionery product 10 that comprises a mixture 11 that comprises a common composition in combination with a dairy composition or an aqueous composition.

The common composition comprises:

- between 5 and 25% by weight of at least one sugar compound,
- between 0.5 and 2.5% by weight of at least one gelling agent,
- between 0,05 and 2 % by weight of a thickener, and

- between 20 and 60% by weight of water.

When the mixture 11 comprises a dairy composition, such composition comprises dairy products between 5 and 40% by weight with respect to the total weight of the mixture 11. In a preferred embodiment, the dairy products are milk powder and/or cream.

When the mixture 11 comprises an aqueous composition, such composition comprises cremogenate between 25 and 60% by weight of the total weight of the mixture.

Cremogenate is the technical word used in the food industry to refer to fruit puree. According to the Spanish Technical-Sanitary Regulation of fruit juices and other similar products intended for human consumption (Royal Decree 781/2013), fruit puree is "the product susceptible to fermentation, but not fermented, obtained by suitable physical processes, for example, by sieving, crushing or shredding the edible part of whole or peeled fruits without removing the juice".

The mixture 11 does not melt and maintains dimensional stability for at least 24 hours. Furthermore, the mixture 11 not only maintains dimensional stability during this time, but also maintains a pleasant, creamy and unctuous texture in the mouth. Taking these parameters to texture profile analysis (TPA) according to UNE-EN ISO 5492:2010, in the case of the confectionery product 10 of the invention, in one embodiment, it comprises the following values after 24 hours at room temperature using a texture analyser, namely with a TA-XT2 texture analyser (Stable Micro Systems, Haslemere, UK) and the software program "Texture Expert for Windows software version 1.20" (Stable Micro Systems):

Hardness (N): between 1,04 and 3,23
Cohesion: between 0.44 and 0.51
Adhesiveness: between 1.1 and 1.8
Elasticity: between 0,8 and 0,9
Gumminess: between 0,7 and 1,3

In a preferred embodiment, the common composition comprises an emulsifier between 0.05% and 1% by weight, the percentages by weight referring to the total weight of the mixture, the emulsifier being preferably selected between E-471, E-473, E-322 and citrus fibres, the most preferred emulsifier being E-473. This emulsifier, in addition to allowing emulsification, favours the incorporation and retention of air in the mixture.

In a preferred embodiment, the mixture 11 comprises at least one of the following ingredients:

- between 0.5 and 10% by weight of flavourings,
- between 0,1 and 5 % by weight of soluble fibres, preferably inulin, and
- between 5 and 40% by weight of main flavouring ingredients.

Percentages by weight refer to the total weight of the mixture 11.

In a preferred embodiment, the gelling agent is selected from pectin, gelatin, agar-agar, iota and gellan gum, preferably from pectin and gelatin.

In a preferred embodiment, the thickener is selected from guar gum (E412), xanthan gum (E415), locust bean gum (E410) and gum arabic (E414), preferably guar gum (E412).

In a preferred embodiment, the sugar compound is selected from monosaccharides, preferably glucose and dextrose, disaccharides, preferably sucrose and/or lactose, bulking agents, preferably maltodextrin, syrups or syrups, preferably liquid glucose and invert sugar, sweeteners and polyols.

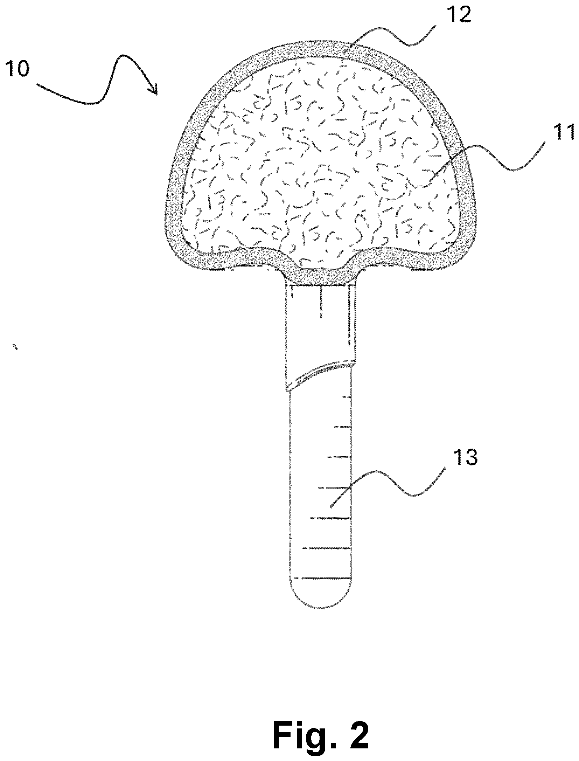

As shown in Figure 2, in a preferred embodiment the mixture 11 is coated with a chocolate or a chocolate substitute coating 12. The coating 12 is preferably less than 3 mm thick. Preferably, because of its dimensions and because it is covered by a chocolate or a chocolate substitute coating 12, the confectionery product 10 of the invention is a bonbon.

In a preferred embodiment of the invention, the mixture 11, before freezing, comprises air inside it with a minimum proportion of 3% with respect to the total volume of the mixture. Preferably, the air is at least partially due to the fact that the mixture 11 is aerated, thus having an overrun generated by the presence of microbubbles distributed inside the mixture 11. In a preferred embodiment, these microbubbles are generated and stabilised in the mixture 11 thanks to the use of an emulsifier, preferably E-743.

In a preferred embodiment, the overrun is greater than 3% when the product comprises an aqueous composition, and is greater than 7% when the product comprises a dairy composition. The percentage of overrun has been calculated using the following formula:

$$\text{Overrun (\%)} = \frac{\text{Volume of areated mixture} - \text{Volume of non-areated mixture}}{\text{Volume of non-areated mixture}}$$

Thanks to the percentage of air in the mixture 11 before freezing, the mixture 11, when frozen, can expand dimensionally into the space occupied by the air, thus preventing the mixture 11 from expanding outwards and cracking the chocolate coating 12.

In a preferred embodiment, the mixture 11 comprises perforations (not shown in the figures) that allow the expansion of the mixture 11 towards said perforations 14 when the product is frozen. These perforations can be used as a complement or as an alternative to the overrun generated by aerating the mixture 11.

In a preferred embodiment, the confectionery product 10 comprises a filling (not shown in the figures) together with the mixture 11. The percentage by volume of the filling respect to the volume of the mixture 11 is preferably less than 50%.

As shown in the figures, in a preferred embodiment of the invention the confectionery product 10 comprises a stick 13 partially inserted into the mixture 11. The part of the stick 13 inserted in the mixture 11 is not visible in Figure 2 because the mixture 11 and the coating 12 have been cut by a vertical plane ahead of the stick 13. Thanks to the stick 13, the confectionery product 10 is easier to handle and consume.

A second aspect of the invention relates to a method of manufacturing the frozen confectionery product 10 of the invention. The method of the invention comprises the consecutive steps described below, some of said steps being optional.

The method of the invention comprises firstly a step of heating water, together with one or more dairy products if the mixture 11 comprises the dairy composition, preferably until the water reaches a temperature of 30°-35°C.

Next, there is a step of addition of powdered sugar compounds, together with fruit concentrate if the mixture 11 comprises the aqueous composition, obtaining a first premixture. This is followed by a step of heating of the first premixture, preferably to a temperature between 45°-50°C, and subsequent addition and disintegration of the remaining powdered ingredients previously mixed, obtaining a second premixture.

The method comprises a following pasteurisation step of the second premixture, preferably at a temperature of between 75°C and 85°C. Then, there is a step of addition and mixing of a cremogenate to the second premixture in case the mixture comprises the aqueous composition, and optionally the remaining ingredients, obtaining the mixture 11.

Then there is a resting and cooling step of the mixture 11 to a temperature where no gelling process of the mixture occurs, such temperature being preferably between 30°C and 60°C.

If chocolate or a chocolate substitute coating 12 is to be added to the mixture 11, it is followed by a step of incorporating air homogeneously into the mixture 11 by means of a mixer, generating micro air bubbles distributed in the mixture 11.

If a mould is used, the method further comprises a step of dosing the mixture 11 into a mould. If the confectionery product 10 comprises a filling, before dosing the mixture 11, the filling is dosed into the mould. In case the embodiment of the confectionery product 10 comprises a stick 13, this is followed by a step of inserting the stick 13 into the mixture 11 through the mould.

The next step is a deep-freezing step of the mixture 11, preferably at a temperature of -30°C.

The next step is a demoulding step of the frozen mixture 11 if a mould has been used.

Next, there is an optional perforation step of the frozen mixture 11, if chocolate or a chocolate substitute coating 12 is to be added to the mixture 11.

In the case where chocolate or a chocolate substitute coating 12 is to be added, the method then comprises a step in which chocolate coating 12 is added, preferably by dipping in a chocolate or chocolate substitute bath. This is followed by a solidification step of the coating 12.

In this way, the confectionery product 10 would be prepared and kept frozen until it is brought to room temperature for later consumption.

**Claims**

1. Frozen confectionery product **characterised in that** it comprises a mixture (11) that comprises a common composition in combination with a dairy composition or an aqueous composition, the common composition comprising:

   - between 5 and 25% by weight of at least one sugar compound,
   - between 0.5 and 2.5% by weight of at least one gelling agent,
   - between 0,05 and 2 % by weight of a thickener, and
   - between 20 and 60% by weight of water,

the dairy composition comprising between 5 and 40% by weight of dairy products, and the aqueous composition comprising between 25 and 60% by weight of cremogenate, the percentages by weight referring to the total weight of the mixture (11).

2. Product according to claim 1, wherein the common composition comprises an emulsifier between 0.05% and 1% by weight, the percentages by weight referring to the total weight of the mixture (11), the emulsifier being preferably selected from E471, E473, E-322 and citrus fibres.

3. Product according to claim 1 or 2, wherein the mixture (11) comprises at least one of the following ingredients:

- between 0.5 and 10% by weight of flavourings,
- between 0,1 and 5 % by weight of soluble fibres, preferably inulin, and
- between 5 and 40% by weight of main flavouring ingredients,

being the percentages by weight referred to the total weight of the mixture (11).

4. Product according to any of the preceding claims, wherein the gelling agent is selected from pectin, gelatin, agar-agar, iota and gellan gum, preferably from pectin and gelatin.

5. Product according to one of the preceding claims, wherein the thickener is selected from guar gum (E412), xanthan gum (E415), locust bean gum (E410) and gum arabic (E414), preferably guar gum (E412).

6. Product according to any of the preceding claims, wherein the sugar compound is selected from monosaccharides, preferably glucose and dextrose, disaccharides, preferably sucrose and/or lactose, bulking agents, preferably maltodextrin, syrups or syrups, preferably liquid glucose and invert sugar, sweeteners and polyols.

7. Product according to any of the preceding claims, wherein the mixture (11) is coated with a chocolate or a chocolate substitute coating (12), such coating (12) having a thickness preferably less than 3 mm.

8. Product according to the preceding claim, wherein the product is a bonbon.

9. Product according to claim 7 or 8, wherein the mixture (11), before freezing, comprises air inside in a proportion of at least 3% of the total volume of the mixture, preferably comprising a percentage of air between 3% and 30%.

10. Product according to claim 9, wherein the air is at least partially due to the mixture (11) is aerated, thus having an overrun generated by the presence of micro bubbles distributed inside the mixture (11).

11. Product according to claim 10, wherein the overrun is greater than 3% when the mixture (11) comprises an aqueous composition, and is greater than 7% when the mixture (11) comprises a dairy composition, the percentage of overrun being calculated by the following formula:

$$\text{Overrun (\%)} = \frac{\text{Volume of areated mixture} - \text{Volume of non-areated mixture}}{\text{Volume of non-areated mixture}}$$

12. Product according to any of claims 9 to 11, wherein the mixture (11) comprises perforations that allow the mixture (11) to expand towards said perforations when the product is frozen.

13. Product according to any of claims 9 to 12, that comprises a filler together with the mixture (11), the percentage by volume of the filler to the volume of the mixture (11) being preferably less than 50%.

14. Product according to any of the preceding claims, comprising a stick (13) partially inserted into the mixture (11).

15. Method of manufacturing the frozen confectionery product (10) according to any of the preceding claims, **characterised in that** it comprises the following steps:

- a water heating step, together with one or more dairy products if the mixture (11) comprises the dairy composition, preferably until the water reaches a temperature of 30°-35°C;

- a step of addition of powdered sugar compounds, together with fruit concentrate if the mixture (11) comprises the aqueous composition, resulting in a first premixture;

- a heating step of the first premixture, preferably to a temperature between 45°-50°C, and subsequent addition and disintegration of the remaining powdered ingredients previously mixed, obtaining a second premixture;

- a pasteurisation step of the second premixture, preferably at a temperature of between 75°C and 85°C;

- a step of addition and mixing of a cremogenate to the second premixture in case the mixture (11) comprises the aqueous composition, and optionally the remaining ingredients, obtaining the mixture (11);

- a step of resting and cooling of the mixture (11) to a temperature at which no gelling of the mixture occurs, such temperature being preferably between 30°C and 60°C;

- an optional step of incorporating air homogeneously into the mixture (11) by means of a mixer, generating micro bubbles of air distributed in the mixture (11);

- an optional step of dosing the mixture (11) into a mould;

- an optional step of inserting a stick (13) into the mixture (11) through the mould;

- a deep-freezing step of the mixture (11), preferably at a temperature of - 30°C;

- a demoulding step of the frozen mixture (11) if there has been a dosing step of the mixture (11) in a mould;

- an optional perforation step of the frozen mixture (11); and

- an optional step of adding a chocolate or chocolate substitute coating, preferably by dipping in a chocolate or chocolate substitute bath, and a solidification step of the coating (12).

10

12

13

**Fig. 1**

**Fig. 2**

Europäisches
Patentamt

European
Patent Office

Office européen
des brevets

## EUROPEAN SEARCH REPORT

**Application Number**

EP 24 38 2336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 319 456 B1 (CARGILL INC [US]) 31 August 2022 (2022-08-31) * examples 1-6 * * paragraphs [0013] - [0046], [0049] - [0057] * * claims 1-12 * | 1-15 | INV. A23G9/32 A23G9/34 A23G9/42 A23G9/46 A23G9/50 |
| X | US 7 727 573 B2 (NESTEC SA [CH]) 1 June 2010 (2010-06-01) * examples 1-12 * * claims 1-29 * * column 2, line 46 - column 10, line 32 * | 1-15 | |
| A | Europa Press: "Loco Polo ofrece una alternativa al helado tradicional", , 4 August 2019 (2019-08-04), XP093196429, Retrieved from the Internet: URL:https://www.youtube.com/watch?v=BiYfDe adUuE [retrieved on 2024-08-19] * the whole document * | 1,7,8,14 | |
| A | Emilia Morano-Williams: "The Science Behind the Non-Melting Ice Cream Phenomena - MOLD :: Designing the Future of Food", , 30 August 2017 (2017-08-30), 19 August 2024 (2024-08-19), XP093196352, Retrieved from the Internet: URL:https://thisismold.com/uncategorized/t he-science-behind-the-non-melting-ice-crea m-phenomena * the whole document * | 1-15 | TECHNICAL FIELDS SEARCHED (IPC) A23G |

-/--

The present search report has been drawn up for all claims

| Place of search | Date of completion of the search | Examiner |
|---|---|---|
| Munich | 20 August 2024 | Barac, Dominika |

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 38 2336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AKESOWAN ADISAK: "Effect of Combined Stabilizers Containing Konjac Flour and [kappa]-Carrageenan on Ice Cream", AGRICULTURAL AND FOOD SCIENCES, 1 October 2008 (2008-10-01), XP093196365, [retrieved on 2024-08-19] * the whole document * | 1-15 | |
| A | Anonymous: "The Right Chemistry: Turkish ice cream recipe is bad news for orchids ¦ Montreal Gazette", , 1 December 2017 (2017-12-01), XP093196384, Retrieved from the Internet: URL:https://montrealgazette.com/opinion/columnists/the-right-chemistry-turkish-ice-cream-recipe-is-bad-news-for-orchids * the whole document * | 1-15 | |
| A | Anonymous: "Hype&Hyper", , 4 June 2020 (2020-06-04), XP093196372, Retrieved from the Internet: URL:https://hypeandhyper.com/the-worlds-first-non-melting-ice-cream-bompas-parr/ [retrieved on 2024-08-19] * the whole document * | 1-15 | **TECHNICAL FIELDS SEARCHED (IPC)** |
| A | "31 INGREDIENT DEVELOPMENTS FOR FROZEN DESSERTS", FOOD TECHNOLOGY, INSTITUTE OF FOOD TECHNOLOGISTS, CHICAGO, IL, US, vol. 56, no. 10, 1 October 2002 (2002-10-01), XP001172212, ISSN: 0015-6639 * the whole document * | 1-15 | |

-/--

The present search report has been drawn up for all claims

| Place of search | Date of completion of the search | Examiner |
|---|---|---|
| Munich | 20 August 2024 | Barac, Dominika |

EPO FORM 1503 03.82 (P04C01)

page 2 of 3

Europäisches
Patentamt

European
Patent Office

Office européen
des brevets

# EUROPEAN SEARCH REPORT

**Application Number**

EP 24 38 2336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARKOWSKA JOANNA ET AL: "The Physicochemical Properties and Melting Behavior of Ice Cream Fortified with Multimineral Preparation from Red Algae", FOODS, vol. 12, no. 24, 14 December 2023 (2023-12-14), page 4481, XP093196361, CH ISSN: 2304-8158, DOI: 10.3390/foods12244481 * the whole document * | 1-15 | |
| A | BIÇER YUSUF ET AL: "The effect of the stabilizer mixture containing konjac gum on the some quality properties of Kahramanmaras type ice cream", EURASIAN JOURNAL OF VETERINARY SCIENCES, vol. 33, no. 2, 30 June 2017 (2017-06-30), pages 113-119, XP093196359, ISSN: 2146-1953, DOI: 10.15312/EurasianJVetSci.2017.145 Retrieved from the Internet: URL:https://dx.doi.org/10.15312/EurasianJV etSci.2017.145> [retrieved on 2024-08-19] * the whole document * | 1-15 | |

**TECHNICAL FIELDS SEARCHED (IPC)**

The present search report has been drawn up for all claims

| Place of search | Date of completion of the search | Examiner |
|---|---|---|
| Munich | 20 August 2024 | Barac, Dominika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2336

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2024

| Patent document cited in search report | | Publication date | Patent family member(s) | | Publication date |
|---|---|---|---|---|---|
| EP 3319456 | B1 | 31-08-2022 | AU | 2016290074 A1 | 25-01-2018 |
| | | | CN | 107912016 A | 13-04-2018 |
| | | | DK | 3319456 T3 | 26-09-2022 |
| | | | EP | 3319456 A1 | 16-05-2018 |
| | | | ES | 2929356 T3 | 28-11-2022 |
| | | | US | 2018192667 A1 | 12-07-2018 |
| | | | WO | 2017007894 A1 | 12-01-2017 |
| US 7727573 | B2 | 01-06-2010 | AR | 024915 A1 | 30-10-2002 |
| | | | AR | 064435 A2 | 01-04-2009 |
| | | | AT | E358986 T1 | 15-05-2007 |
| | | | AU | 783836 B2 | 15-12-2005 |
| | | | BR | 0013178 A | 11-01-2005 |
| | | | CA | 2377035 A1 | 01-02-2001 |
| | | | CN | 1374837 A | 16-10-2002 |
| | | | DE | 20023845 U1 | 21-09-2006 |
| | | | DE | 60034342 T2 | 16-08-2007 |
| | | | DK | 1202638 T3 | 18-06-2007 |
| | | | EG | 22224 A | 31-10-2002 |
| | | | EP | 1202638 A1 | 08-05-2002 |
| | | | EP | 1787527 A2 | 23-05-2007 |
| | | | ES | 2283305 T3 | 01-11-2007 |
| | | | HK | 1046219 A1 | 03-01-2003 |
| | | | IL | 147732 A | 31-08-2004 |
| | | | JP | 4354666 B2 | 28-10-2009 |
| | | | JP | 2003505056 A | 12-02-2003 |
| | | | MX | PA02000770 A | 22-07-2002 |
| | | | MY | 128808 A | 28-02-2007 |
| | | | PE | 20010277 A1 | 26-03-2001 |
| | | | US | 6596333 B1 | 22-07-2003 |
| | | | US | 2003134025 A1 | 17-07-2003 |
| | | | US | 2005123666 A1 | 09-06-2005 |
| | | | US | 2010209571 A1 | 19-08-2010 |
| | | | US | 2013149421 A1 | 13-06-2013 |
| | | | WO | 0106865 A1 | 01-02-2001 |
| | | | ZA | 200201440 B | 20-05-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013147847 A1